# EUROPÄISCHE PATENTSCHRIFT

(11) **EP 3 956 190 B1**
(45) Veröffentlichungstag und Bekanntmachung des Hinweises auf die Patenterteilung: **28.06.2023**
(21) Anmeldenummer: 20728399.5
(22) Anmeldetag: 05.05.2020
(51) Int. Cl.: B60T 13/66, B60T 17/22

(54) **BREMSABSPERRANORDNUNG UND VERFAHREN ZUM BETRIEB EINER BREMSABSPERRANORDNUNG**
BRAKE SHUT-OFF ARRANGEMENT AND METHOD FOR OPERATING A BRAKE SHUT-OFF ARRANGEMENT
DISPOSITIF DE BLOCAGE DE FREIN ET PROCÉDÉ DE FONCTIONNEMENT D'UN DISPOSITIF DE BLOCAGE DE FREIN

(30) Priorität: 28.05.2019 DE 102019207794
(43) Veröffentlichungstag der Anmeldung: 23.02.2022
(73) Patentinhaber: Siemens Mobility GmbH, 81739 München (DE)
(72) Erfinder: LICHTERFELD, Jens Peter, 91058 Erlangen (DE); WIESAND, Manfred, 90559 Burgthann (DE)
(74) Vertreter: Siemens Patent Attorneys
(86) Internationale Anmeldenummer: PCT/EP2020/062357
(87) Internationale Veröffentlichungsnummer: WO 2020/239367

(56) Entgegenhaltungen:
- EP-A1- 1 674 358
- EP-A1- 1 932 739
- WO-A1-2017/167592
- DE-A1- 10 135 797

## Beschreibung

Konventionelle spurgebundene Fahrzeuge, insbesondere konventionelle Schienenfahrzeuge, besitzen meist mehrere Bremssysteme, beispielsweise ein pneumatisches Bremssystem (kurz als "pneumatische Bremse" bezeichnet) und ein elektrodynamisches Bremssystem (kurz als "elektrodynamische Bremse" bezeichnet), welche die erforderlichen Bremswegeanforderungen oder Verzögerungsanforderungen an das Fahrzeug erfüllen.

Insbesondere bei einer Sicherheitsbremsung - also bei einer Schnellbremsung oder einer Notbremsung - muss vorgegebenen Sicherheitsanforderungen bezüglich des Bremswegs entsprochen werden. Um dies zu gewährleisten weisen die genannten konventionellen Fahrzeuge meist eine Vielzahl lokaler Bremsvorrichtungen mit lokalen Komponenten auf, mittels derer die Bremssysteme lokal - also beispielsweise wagenweise, drehgestellweise oder radsatzweise - einen Bremsbefehl in eine Bremskraft an zugeordneten Radsätzen umsetzen. Meist wird bei einer Sicherheitsbremsung nur ein Teil der vorhandenen Bremssysteme, beispielsweise das pneumatische Bremssystem, eingesetzt, so dass bei einer Sicherheitsbremsung auch nur dessen lokale Bremsvorrichtungen zum Einsatz kommen.

Eine Architektur, welche eine Vielzahl lokaler Bremsvorrichtungen vorsieht, hat den Vorteil, dass bei Störung oder Ausfall einer der lokalen Bremsvorrichtungen nur der Anteil dieser lokalen Bremsvorrichtung am Gesamtbremsvermögen des Fahrzeugs ausfällt und somit die für die Sicherheit des Fahrzeugs erforderlichen Bremswege zuverlässig eingehalten werden können.

Da die lokalen Bremsvorrichtungen mit hoher Zuverlässigkeit Bremskraft erzeugen sollen, haben sie die Eigenschaft, dass sie bei einer Störung, beispielsweise aufgrund des Vorliegens eines Fehlers einer ihrer lokalen Komponenten, meist Bremskraft erzeugen. Als sichere Ausfallreaktion ist also bei den genannten konventionellen Fahrzeugen meist vorgesehen, dass von einer lokalen Bremsvorrichtung, wenn diese von einer Störung betroffene ist, dauerhaft eine Bremskraft an den ihr zugeordneten Radsätzen aufgebaut wird, dass also deren Bremsfunktion ausgeführt wird. In der Folge muss das Schienenfahrzeug dann zwangsgebremst werden um anschließend durch geeignete Maßnahmen deren Bremskraft und somit deren Bremsfunktion wieder aufzuheben. Dies geschieht konventionell meist durch manuelles oder elektrisches Notlösen bzw. Notentriegeln der von der Störung betroffenen lokalen Bremsvorrichtung. Ausgelöst wird das manuelle oder elektrische Notlösen bzw. Notentriegeln einer von einer Störung betroffenen lokalen Bremsvorrichtung meist von autorisiertem Personal (beispielsweise von einer Zugbegleitperson, von einem Zugführer etc.) durch Betätigung eines lokalen Betätigungselementes (beispielsweise eines Absperrhahnes, eines Bowdenzuges, eines Schalters etc.) einer lokalen Abschaltvorrichtung, welche der jeweiligen lokalen Bremsvorrichtung zugeordnet und mit dieser wirkverbunden ist. Bei solchen Störungen muss demnach der Betrieb des betroffenen Fahrzeugs unterbrochen werden, was den Fahrbetrieb beeinträchtigt und zu erheblichen Verspätungen führen kann.

Nachdem die von der Störung betroffene lokale Bremsvorrichtung mittels der ihr zugeordneten lokalen Abschaltvorrichtung deaktiviert wurde, ist dann eine Weiterfahrt des Fahrzeugs unter Berücksichtigung des um die deaktivierte Bremsvorrichtung reduzierten Bremsvermögens möglich.

Die Erfindung betrifft eine Bremsabsperranordnung mit mehreren aus einer Einschaltstellung in eine erste Abschaltstellung überführbaren Abschaltvorrichtungen.

Auch aus der Patentschrift DE 101 35 797 C2 ist eine gattungsgemäße Bremsabsperranordnung bekannt. Hier dient jede der Abschaltvorrichtungen dazu, die Bremsfunktion der zugeordneten Bremsvorrichtung zu unterdrücken, wenn einerseits eine vorgegebene elektrische Mindestleistung einer Generator-Bremse erreicht wird und andererseits keine Schnellbremsung vorliegt bzw. - falls eine Schnellbremsung vorliegt - ein vorgegebener Mindestfahrmotorenstrom überschritten wird.

Der Erfindung liegt die Aufgabe zu Grunde eine Bremsabsperranordnung mit mehreren aus einer Einschaltstellung in eine erste Abschaltstellung überführbaren Abschaltvorrichtungen anzugeben, welche im Hinblick auf eine Verbesserung des Fahrbetriebs eine bessere Reaktion auf die oben erwähnten Störungen gewährleistet.

Diese Aufgabe wird erfindungsgemäß durch eine Bremsabsperranordnung mit den Merkmalen gemäß Patentanspruch 1 gelöst. Vorteilhafte Ausgestaltungen der erfindungsgemäßen Bremsabsperranordnung sind in Unteransprüchen angegeben.

Demnach ist erfindungsgemäß vorgesehen, dass die Bremsabsperranordnung geeignet ausgebildet ist, durch ein Überführen einer der Abschaltvorrichtungen in ihre erste Abschaltstellung für zumindest einen Teil der übrigen Abschaltvorrichtungen das Überführen in ihre erste Abschaltstellung zu verhindern und, falls sich von dem zumindest einen Teil der übrigen Abschaltvorrichtungen schon eine andere Abschaltvorrichtung in ihrer ersten Abschaltstellung befindet, ein Überführen der anderen Abschaltvorrichtung in ihre Einschaltstellung zu bewirken.

Durch die erfindungsgemäße Lösung kann sichergestellt werden, dass sich nur eine der Abschaltvorrichtungen der Bremsabsperranordnung in ihrer ersten Abschaltstellung befindet.

Ein weiterer wesentlicher Vorteil ist, dass damit die Voraussetzung für die Zulässigkeit eines zentralen Auslösens einer Abschaltung geschaffen ist. Es ist also nunmehr die Voraussetzung geschaffen, eine Abschaltung in für einen sicheren Bahnbetrieb zulässiger Weise schnell und von zentraler Stelle aus vorzunehmen. Das zentrale Auslösen einer Abschaltung kann beispielsweise durch Fernsteuerung oder auch automatisch durch Steuerungstechnik, geschehen. Dadurch können die betrieblichen Verzögerungen auf den Fahrbetrieb und damit verbundene negative Auswirkungen auf die Einhaltung des Fahrplanes möglichst geringgehalten werden. Ein vollautomatisches System, welches diese Abschaltung vornimmt, würde also negative betriebliche Auswirkungen einer Abschaltung besonders geringhalten.

Mit Vorteil ist vorgesehen, dass die Bremsabsperranordnung geeignet ausgebildet ist, durch ein Überführen der einen Abschaltvorrichtung aus ihrer ersten Abschaltstellung in eine zweite Abschaltstellung zu bewirken, dass von den übrigen Abschaltvorrichtungen eine in ihre erste Abschaltstellung überführbar ist.

Diese Ausgestaltung der erfindungsgemäßen Vorrichtung hat den Vorteil, dass von den lokalen Bremsvorrichtungen, auf welche die Bremsabsperranordnung wirkt, nicht nur eine, sondern zwei abgeschaltet werden können.

Bei einer vorteilhaften Ausgestaltung der erfindungsgemäßen Bremsabsperranordnung ist vorgesehen, dass die diese eine durch eine Energieversorgungseinrichtung gespeiste Versorgungsleitung aufweist, an welche die Abschaltvorrichtungen über jeweils einen Versorgungsanschluss in Reihe angeschlossen sind, wobei jede der Abschaltvorrichtungen jeweils eine im Zuge der Versorgungsleitung ihrem Versorgungsanschluss nachgeordnete Unterbrechungseinheit mit einem Kontakt zum Unterbrechen der Versorgungsleitung aufweist.

Vorzugsweise ist dann vorgesehen, dass jede der Abschaltvorrichtungen jeweils eine Bremsabsperreinheit aufweist und derart ausgebildet ist, dass ihr Überführen in ihre erste Abschaltstellung durch zumindest ein ihr zugeordnetes Abschaltsteuersignal erfolgt, bei Einwirkung dessen einerseits ihr Kontakt geöffnet und damit die Versorgungsleitung unterbrochen wird und andererseits ihre Bremsabsperreinheit aus einer Freigabestellung in eine erste Sperrstellung überführt wird.

Außerdem kann dann mit Vorteil vorgesehen sein, dass jede der Abschaltvorrichtungen jeweils derart ausgebildet ist, dass bei Einwirkung von zumindest zwei ihr zugeordneten Einschaltsteuersignalen einerseits ihr Kontakt geschlossen und damit die Versorgungsleitung geschlossen wird und andererseits ihre Bremsabsperreinheit aus ihrer ersten Sperrstellung zurück in ihre Freigabestellung überführt wird.

Es wird auch als vorteilhaft angesehen, wenn jede der Abschaltvorrichtungen jeweils derart ausgebildet ist, dass bei Einwirkung eines ihr zugeordneten Abschaltbediensignals oder bei Einwirkung einer Bedienhandlung einerseits ein zusätzlicher Kontakt, welcher parallel zu ihrem einen Kontakt geschaltet ist, geschlossen und damit die Versorgungsleitung geschlossen wird und andererseits ihre Bremsabsperreinheit in eine zweite Sperrstellung überführt wird.

Die Erfindung betrifft auch ein Bremssystem für ein Fahrzeug, welches zumindest eine erfindungsgemäße Bremsanordnung aufweist.

Dabei wird es als vorteilhaft angesehen, wenn das Bremssystem mehreren Bremsvorrichtungen aufweist, wobei jeder der Abschaltvorrichtungen jeweils eine der Bremsvorrichtungen zugeordnet ist und wobei jede der Abschaltvorrichtungen geeignet ausgebildet ist, in ihrer ersten Abschaltstellung die Bremsfunktion der ihr zugeordneten Bremsvorrichtungen zu unterbinden und in ihrer ersten Einschaltstellung die Bremsfunktion der ihr zugeordneten Bremsvorrichtung freizugeben.

Außerdem wird es dabei als vorteilhaft angesehen, wenn das Bremssystem für das Fahrzeug zwei oder mehr Bremsabsperranordnungen nach einem der Ansprüche 1 bis 6 aufweist, wobei jede der Bremsabsperranordnungen jeweils auf einen Teil der Bremsvorrichtungen des Fahrzeugs wirkt.

Der Einsatz von zwei oder mehr Bremsabsperranordnungen ist insbesondere bei längeren Fahrzeugen vorteilhaft. So kann vorgesehen sein, dass für jeden Halbzug oder jeden Teilzug eines Schienenfahrzeugs eine jeweilige Bremsabsperranordnung vorgesehen ist, welche auf die lokalen Bremsvorrichtungen des jeweiligen Halbzuges bzw. des jeweiligen Teilzuges wirkt.

Ein sich daraus ergebender wesentlicher Vorteil ist, dass durch den Einsatz einer erfindungsgemäßen Bremsabsperranordnung bei einem Bremssystem eines Fahrzeugs, welche auf alle lokalen Bremsvorrichtungen eines Bremssystems des Fahrzeugs wirkt, oder durch den Einsatz von zwei oder mehr erfindungsgemäßer Bremsabsperranordnungen bei einem Bremssystem eines Fahrzeugs, welche jeweils auf einen Teil der lokalen Bremsvorrichtungen eines Bremssystems des Fahrzeugs wirken, sichergestellt werden kann, dass nicht fälschlicherweise unzulässig viele der lokalen Bremsvorrichtungen des Bremssystems des Fahrzeugs deaktiviert werden.

Ein weiterer wesentlicher Vorteil ist, dass mit dieser Sicherstellung die Voraussetzung für die Zulässigkeit einer zentralen Auslösung einer Abschaltung geschaffen ist. Es ist also nunmehr die Voraussetzung geschaffen, eine beispielsweise defekte lokale Bremsvorrichtung schnell und von zentraler Stelle aus, beispielsweise durch Fernsteuerung oder auch automatisch durch Steuerungstechnik, abschalten zu dürfen, um die betrieblichen Verzögerungen auf den Fahrbetrieb und damit verbundene negative Auswirkungen auf die Einhaltung des Fahrplanes möglichst gering zu halten. Ein vollautomatisches System, welches diese Abschaltung vornimmt, würde zulässig geringe betriebliche Auswirkungen dieser Abschaltung sicherstellen.

Darüber hinaus betrifft die Erfindung ein Fahrzeug, insbesondere spurgeführtes Fahrzeug, mit einem derartigen Bremssystem.

Kommt beispielsweise nur eine erfindungsgemäße Bremsabsperranordnung bei einem Bremssystem eines Fahrzeugs zum Einsatz, welche auf alle lokalen Bremsvorrichtungen des Bremssystems des Fahrzeugs wirkt, so kann sichergestellt werden, dass sich nur die Bremsfunktion einer einzigen der Bremsvorrichtungen unterbinden lässt.

Kommt eine bestimmte Mehrzahl an erfindungsgemäßen Bremsabsperranordnungen bei einem Bremssystem eines Fahrzeugs zum Einsatz, welche auf verschiedene der lokalen Bremsvorrichtungen des Bremssystems des Fahrzeugs wirken, so kann sichergestellt werden, dass sich nur die Bremsfunktionen von einer entsprechenden Mehrzahl an Bremsvorrichtungen unterbinden lässt.

Außerdem betrifft die Erfindung ein Verfahren zum Betrieb einer Bremsabsperranordnung, welche mehrere aus einer Einschaltstellung in eine erste Abschaltstellung überführbare Abschaltvorrichtungen aufweist.

Erfindungsgemäß ist vorgesehen, dass durch ein Überführen einer der Abschaltvorrichtungen in ihre erste Abschaltstellung für zumindest einen Teil der übrigen Abschaltvorrichtungen das Überführen in ihre erste Abschaltstellung verhindern wird und, falls sich von dem zumindest einen Teil der übrigen Abschaltvorrichtungen schon eine andere Abschaltvorrichtung in ihrer ersten Abschaltstellung befindet, ein Überführen der anderen Abschaltvorrichtung in ihre Einschaltstellung bewirkt wird.

Bezüglich der Vorteile des erfindungsgemäßen Verfahrens sei auf die obigen Ausführungen im Zusammenhang mit der erfindungsgemäßen Bremsabsperranordnung verwiesen.

Es wird als vorteilhaft angesehen, wenn durch ein Überführen der einen Abschaltvorrichtung aus ihrer ersten Abschaltstellung in eine zweite Abschaltstellung bewirkt wird, dass von den übrigen Abschaltvorrichtungen eine in ihre erste Abschaltstellung überführbar ist.

Es wird außerdem als vorteilhaft angesehen, wenn eine Versorgungsleitung, an welche die Abschaltvorrichtungen über jeweils einen Versorgungsanschluss in Reihe angeschlossen sind, durch eine Energieversorgungseinrichtung gespeist wird, wobei jede der Abschaltvorrichtungen jeweils mit einer im Zuge der Versorgungsleitung ihrem Versorgungsanschluss nachgeordneten Unterbrechungseinheit mit einem Kontakt zum Unterbrechen der Versorgungsleitung bereitgestellt wird.

Dabei ist es vorteilhaft, wenn das Überführen einer jeweiligen der Abschaltvorrichtungen in ihre erste Abschaltstellung jeweils durch zumindest ein ihr zugeordnetes Abschaltsteuersignal erfolgt, bei Einwirkung dessen einerseits ihr Kontakt geöffnet und damit die Versorgungsleitung unterbrochen wird und andererseits ihre Bremsabsperreinheit aus einer Freigabestellung in eine erste Sperrstellung überführt wird.

Außerdem ist es vorteilhaft, wenn bei einer jeweiligen der Abschaltvorrichtungen bei Einwirkung von zumindest zwei ihr zugeordneten Einschaltsteuersignalen einerseits ihr Kontakt geschlossen und damit die Versorgungsleitung geschlossen wird und andererseits ihre Bremsabsperreinheit aus ihrer ersten Sperrstellung zurück in ihre Freigabestellung überführt wird.

Mit Vorteil ist auch vorgesehen, dass bei einer jeweiligen der Abschaltvorrichtungen bei Einwirkung eines ihr zugeordneten Abschaltbediensignals oder bei Einwirkung einer Bedienhandlung einerseits ein zusätzlicher Kontakt, welcher parallel zu ihrem ersten Kontakt geschaltet ist, geschlossen und damit die Versorgungsleitung geschlossen wird und andererseits ihre Bremsabsperreinheit in eine zweite Sperrstellung überführt wird.

Die Erfindung wird nachfolgend anhand der Figuren näher erläutert. Dabei zeigen beispielshaft die
- Figur 1: ein Schienenfahrzeug mit einer erfindungsgemäßen Bremsabsperranordnung, welche wagenweise wirkt, die
- Figur 2: ein weiteres Schienenfahrzeug mit einer erfindungsgemäßen Bremsabsperranordnung, welche drehgestellweise wirkt, und die
- Figur 3: ein elektrisches Schaltbild der erfindungsgemäßen Bremsabsperranordnung des in Figur 1 gezeigten Schienenfahrzeugs.

In den Figuren werden der Übersicht halber für identische oder vergleichbare Komponenten stets dieselben Bezugszeichen verwendet.

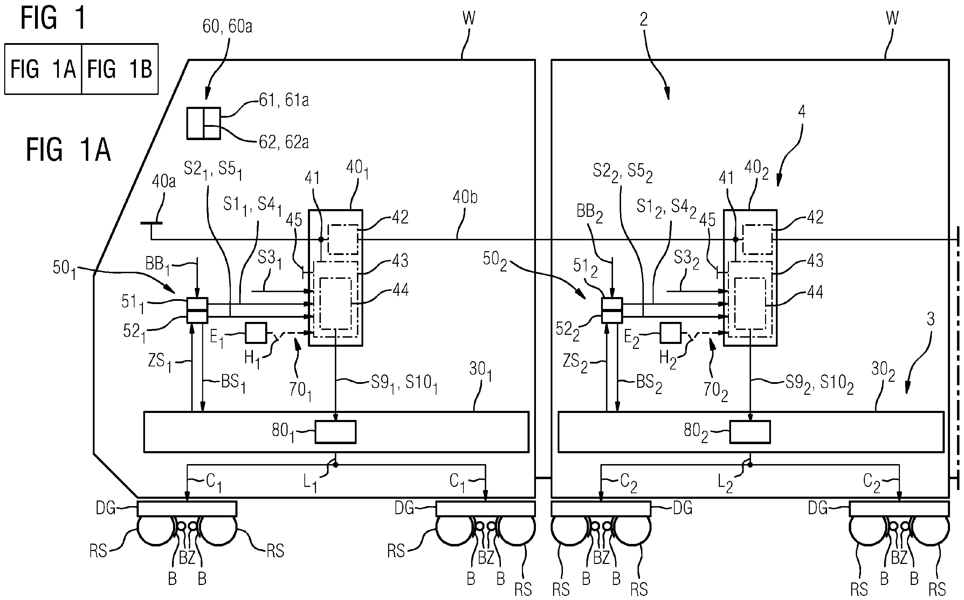

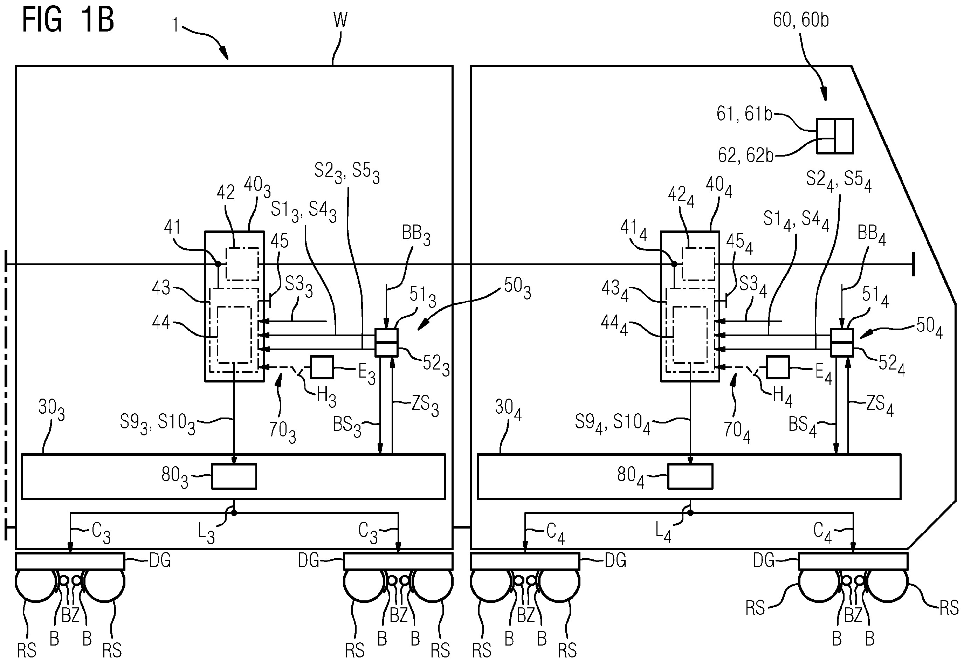

Die Figur 1 zeigt ein Fahrzeug 1 in Form eines spurgeführten Fahrzeugs. Im vorliegenden Fall ist das spurgeführte Fahrzeug ein Schienenfahrzeug. Das Fahrzeug 1 umfasst vier Wagen W. Bei dem gezeigten Fahrzeug 1 weist jeder der Wagen W jeweils zwei Drehgestelle DG auf. Dies ist jedoch nur beispielhaft, denn ein Wagen könnte insbesondere auch mehr Drehgestelle aufweisen oder Drehgestelle könnten aufeinanderfolgenden Wagen zugeordnet sein (bekannt als "Jakobs-Drehgestelle"). Jedes der Drehgestelle DG weist zwei Radsätze RS auf, wobei auch diese Anzahl Radsätze pro Drehgestell nur beispielhaft ist.

Das Fahrzeug 1 umfasst weiterhin ein Bremssystem 2, welches eine Bremsanordnung 3 und eine Bremsabsperranordnung 4 aufweist.

Zu der Bremsanordnung 3 gehört eine zentrale Bremssteuereinrichtung 61, welche als Teil einer zentralen Fahrzeugsteuereinrichtung 60 ausgebildet ist. Die zentrale Fahrzeugsteuereinrichtung 60 ist beispielsweise aus zwei in den Endwagen angeordneten zentralen Fahrzeugsteuereinheiten 60a und 60b gebildet, von denen hier beispielshaft nur die eine 60a betrieben und die andere 60b als Rückfallebene bereitgehalten wird.

Somit besteht die zentrale Bremssteuereinrichtung 61 entsprechend aus zwei zentralen Bremssteuereinheiten 61a und 61b, von denen hier beispielshaft nur die eine 61a betrieben und die andere 61b als Rückfallebene bereitgehalten wird.

Zu der Bremsanordnung 3 gehören weiterhin lokale Bremssteuereinheiten 50₁-50₄ und lokale Bremsvorrichtungen 30₁-30₄.

Die lokale Bremssteuereinheiten 50₁-50₄ geben unter Einwirkung von Bremsbefehlen BB₁-BB₄ der zentralen Bremssteuereinrichtung 61 Bremssteuersignale BS₁-BS₄ an die lokalen Bremsvorrichtungen 30₁-30₄ aus.

Bei dem hier gezeigten Fahrzeug 1 weisen die lokalen Bremssteuereinheiten 50₁-50₄ Bremssteuergeräte (kurz BSG) 51₁-51₄ und Schnellbremssteuergeräte 52₁-52₄ (kurz SBSG) auf, so dass als Bremssteuersignale BS₁-BS₄ Betriebsbremssteuersignale und/oder Schnellbremssteuersignale ausgegeben werden.

Dabei ist je Wagen W jeweils eine der lokalen Bremssteuereinheiten 50₁-50₄ - und damit eines der lokalen Bremssteuergeräte 51₁-51₄ und eines der lokalen Schnellbremssteuergeräte 52₁-52₄ - sowie jeweils eine der lokalen Bremsvorrichtungen 30₁-30₈ vorgesehen.

Die lokalen Bremsvorrichtungen 30₁-30₄ können zur Erzeugung von Bremskräften bekanntermaßen in unterschiedlichster Weise, beispielsweise als elektro-pneumatische, elektrohydraulische oder elektro-mechanische Bremsvorrichtungen, ausgebildet sein. Bei dem gezeigten Fahrzeug 1 sind die lokalen Bremsvorrichtungen 30₁-30₄ als elektro-pneumatische Bremsvorrichtungen ausgebildet, bei welchen die Bremssteuersignale BS₁-BS₄ in Bremsdrücke C₁-C₄ umgesetzt und über Bremsdruckleitungen L₁-L₄ an Bremszylinder BZ von Scheibenbremsen B des jeweiligen Wagens W ausgeben werden. Mittels der Bremszylinder BZ werden die anliegenden Bremsdrücke C₁-C₄ in bekannter Weise in Bremskräfte zum Abbremsen des Fahrzeugs 1 umgesetzt.

Die von den lokalen Bremssteuereinheiten 50₁-50₄ gesteuerten lokalen Bremsvorrichtungen 30₁-30₄ geben Bremszustandssignale ZS₁-ZS₄ an die lokalen Bremssteuereinheiten 50₁-50₄ aus.

Zu der Bremsabsperranordnung 4 gehört eine zentrale Bremsabsperrauslöseeinrichtung 62, welche auch Teil der zentralen Fahrzeugsteuereinrichtung 60 ist. Die zentrale Bremsabsperrauslöseeinrichtung 62 besteht aus zwei zentralen Einheiten 62a und 62b zum Auslösen einer Absperrung (zentrale Absperrungen in Form von Fernabsperrungen), von denen hier beispielshaft auch wieder nur die eine 62a betrieben und die andere 62b als Rückfallebene bereitgehalten wird.

Weiterhin gehören zu der Bremsabsperranordnung 4 eine von einer zentralen Energieversorgungseinrichtung 40a gespeiste zentrale, fahrzeugweite Versorgungsleitung 40b.

Zu der Bremsabsperranordnung 4 gehören außerdem lokale Einheiten 70₁-70₄ zum Auslösen einer Absperrung (lokale Absperrungen in Form lokaler Bedieneinheiten).

Darüber hinaus gehören zu der Bremsabsperranordnung 4 lokale Abschaltvorrichtungen 40₁-40₄ sowie im Zuge der Bremsdruckleitungen L₁-L₄ angeordnete lokale Abschaltventile 80₁-80₄.

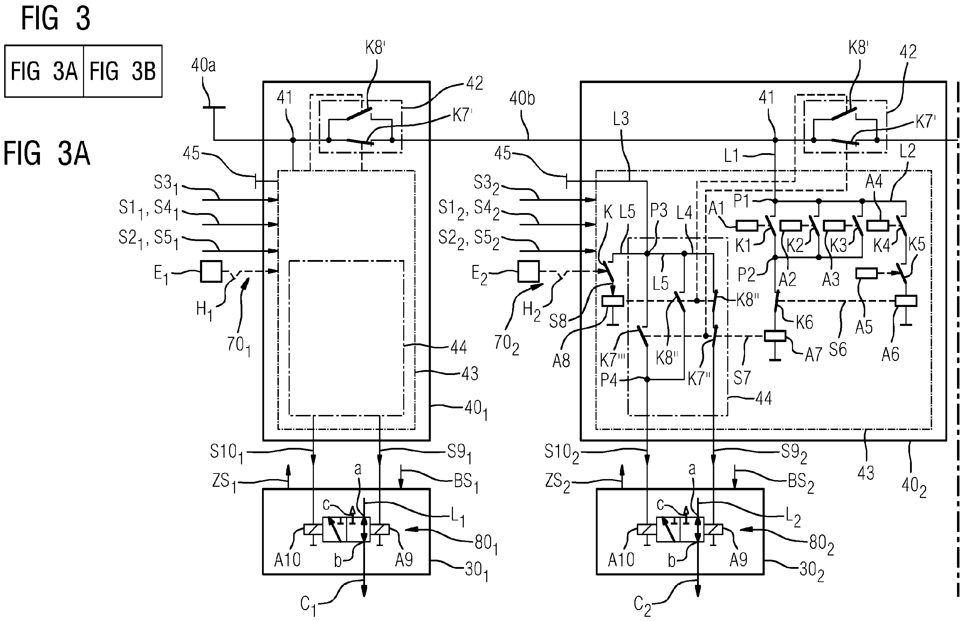

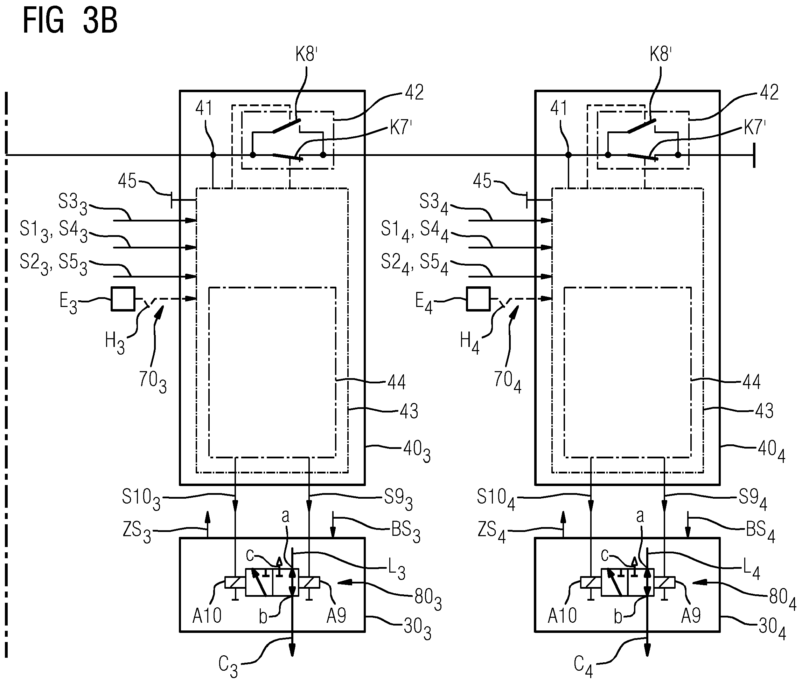

Die lokalen Abschaltvorrichtungen 40₁-40₄ sind alle gleich ausgebildet. Gemäß der Figur 3 weisen sie jeweils einen Versorgungsanschluss 41, eine Unterbrechungseinheit 42, eine mit einer Bremsabsperreinheit 44 versehene Bremsabsperreinrichtungen 43 und eine lokale Einspeisung 45 (lokale Energieversorgungseinrichtung) auf.

Die Figur 3 zeigt ein elektrisches Schaltbild der an die Bremsanordnung 3 angeschlossenen Bremsabsperranordnung 4 des in Figur 1 gezeigten Schienenfahrzeugs 1.

Dabei ist eine 40₂ der Abschaltvorrichtung 40₁-40₄, im Detail gezeigt.

Wie die Figur 3 zeigt, ist die Unterbrechungseinheit 42 dem Versorgungsanschluss 41 im Zuge der Versorgungsleitung 40b nachgeordnet. Die Unterbrechungseinheit 42 ist eine Parallelschaltung aus einem Kontakt K7' und einem zusätzlichen Kontakt K8'. Der eine Kontakt K7' ist ein Öffner und der zusätzliche Kontakt K8' ist ein Schließer.

Die Bremsabsperreinrichtung 43 weist Kontakte K, K1 bis K6, sowie K7" und K7‴ sowie K8" und K8‴ auf, wobei die Kontakte K7" und K7‴ sowie K8" und K8‴ Teil der Bremsabsperreinheit 44 sind.

Außerdem weist die Bremsabsperreinrichtung 43 Aktuatoren A1 bis A8 zum Betätigen der Kontakte K, K1 bis K6, sowie K7" und K7‴ sowie K8" und K8‴ auf. Zusätzlich weist die Bremsabsperreinrichtung 43 Aktuatoren A9 und A10 zum Betätigen des lokalen Abschaltventils 80₂ auf, welches im Zuge der Bremsdruckleitung 31 der zugeordneten lokalen Bremsvorrichtungen 30₂ angeordnet ist.

Im Zuge einer ersten Leitung L1 sind zwischen Anschlusspunkten P1, P2 die Kontakte K1, K2 und K3 parallelgeschaltet. Außerdem sind im Zuge dieser ersten Leitung L1, und zwar in Reihe zu der Parallelschaltung der Kontakte K1, K2 und K3, der Kontakt K6 sowie der Aktuator A7 geschaltet, wobei der Kontakt K6 der Parallelschaltung nachgeordnet ist und wobei der Aktuator A7 dem Kontakt K6 nachgeordnet ist.

Im Zuge einer zweiten Leitung L2, die eingangsseitig stromleitend mit dem Anschlusspunkt P1 verbunden ist, sind in Reihe die Kontakte K4 und K5 sowie der Aktuator A6 geschaltet, wobei der der Aktuator A6 der Reihenschaltung der Kontakte K4 und K5 nachgeordnet ist.

Im Zuge einer dritten Leitung L3, welche eingangsseitig an eine jeweilige der lokalen Energieversorgungseinrichtungen 45 angeschlossen ist, sind zwischen weiteren Anschlusspunkten P3, P4 die Kontakte K7‴ und K8‴ parallelgeschaltet.

Im Zuge einer vierten Leitung L4, die eingangsseitig stromleitend mit dem Anschlusspunkt P3 verbunden ist, sind die Kontakte K8" und K7" in Reihe geschaltet.

Im Zuge einer fünften Leitung L5, die auch eingangsseitig stromleitend mit dem Anschlusspunkt P3 verbunden ist, sind der Kontakt K und der Aktuator A8 in Reihe geschaltet, wobei der Aktuator A8 dem Kontakt K nachgeordnet ist.

Die dritte Leitung L3 ist ausgangsseitig an den Aktuator A10 angeschlossen, welcher zur Betätigung des lokalen Abschaltventils 80₂ dient.

Die vierte Leitung L4 ist ausgangsseitig an den Aktuator A9 angeschlossen, welcher ebenfalls zur Betätigung des lokalen Abschaltventils 80₂ dient.

Im Folgenden ist das erfindungsgemäße Verfahren zum Betrieb der Bremsabsperranordnung 4 im Detail beschrieben.

Die Figur 3 zeigt das Schienenfahrzeug in einem Zustand, bei welchem sich alle lokalen Abschaltvorrichtungen 40₁-40₄ in einer Einschaltstellung befinden. Dabei sind die Kontakte K7' geschlossen und die Kontakte K8' offen. Außerdem befinden sich dabei die Bremsabsperreinheiten 44 in einer Freigabestellung, bei welcher die Kontakte K7" und K8" geschlossen und damit die Aktuatoren A9 stromleitend mit den lokalen Einspeisungen 45 verbunden sind und bei welcher die K7‴ und K8‴ offen und damit die Aktuatoren A10 von den lokalen Einspeisungen 45 getrennt sind. Somit liegen die Steuersignale S9 und S10 an den Abschaltventile 80₁-80₄ an, unter Einwirkung derer diese lokalen Abschaltventile 80₁-80₄ eine Stellung einnehmen, bei der sie zwischen ihren Anschlüssen a und b einen jeweiligen Strömungspfad bilden, so dass die von den lokalen Bremsvorrichtungen 30₁-30₄ gebildeten Bremsdrücke C₁-C₄ an den Bremszylindern BZ anliegen.

Zum Überführen der Abschaltvorrichtungen 40₁-40₄ aus ihrer Einschaltstellung in eine erste Abschaltstellung sind Abschaltsteuersignale S1₁, S2₁, S3₁ - S1₄, S2₄, S3₄ vorgesehen. Hierbei sind die lokalen Bremssteuergeräte (BSG's) 51₁-51₄ geeignet ausgebildet, die Abschaltsteuersignale S1₁, S1₂, S1₃, S1₄ auszugeben. Die lokalen Schnellbremssteuergeräte (SBSG's) 52₁-52₄ sind geeignet ausgebildet, die Abschaltsteuersignale S2₁, S2₂, S2₃, S2₄ ausgegeben und die zentrale Bremsabsperrauslöseeinrichtungen 62 ist geeignet ausgebildet, die Abschaltsteuersignale S3₁, S3₂, S3₃, S3₄ auszugeben.

Eine Abschaltvorrichtung befindet sich in ihrer ersten Abschaltstellung, wenn ihre Kontakte K7' und K8' offen sind und wenn sich ihre Bremsabsperreinheit 44 in einer ersten Sperrstellung befindet, bei welcher ihr Kontakte K7" offen und ihr Kontakt K8" geschlossen ist - also ihr Aktuator A9 von den lokalen Einspeisungen 45 getrennt ist - und bei welcher ihr K7‴ geschlossen und ihr Kontakt und K8‴ offen ist - also ihr Aktuator A10 stromleitend mit der lokalen Einspeisungen 45 verbunden ist. Das zugeordnete lokale Abschaltventil nimmt dabei eine Stellung ein, bei welcher es dann zwischen seinen Anschlüssen b und c einen Strömungspfad bildet, so dass die ihm zugeordneten Bremszylinder BZ ins Freie entlüftet werden.

Zum Überführen der Abschaltvorrichtungen 40₁-40₄ aus ihrer erste Abschaltstellung zurück in ihre Einschaltstellung sind Einschaltsteuersignale S4₁, S5₁ - S4₄, S5₄ vorgesehen. Hierbei sind die lokalen Bremssteuergeräte (BSG's) 51₁-51₄ geeignet ausgebildet, die Einschaltsteuersignale S4₁, S4₂, S4₃, S4₄ auszugeben und die lokalen Schnellbremssteuergeräte (SBSG's) 52₁-52₄ sind geeignet ausgebildet, die Einschaltsteuersignale S5₁, S5₂, S5₃, S5₄ auszugeben.

Eine Abschaltvorrichtung kann sich in einer zweiten Abschaltstellung befinden. Bei einer zweiten Abschaltstellung ist ihr Kontakt K8' geschlossen. Ihr Kontakt K7' kann entweder geschlossen oder offen sein. Außerdem befindet sich bei einer zweiten Abschaltstellung einer Abschaltvorrichtung ihre Bremsabsperreinheit 44 in einer Sperrstellung, bei der ihr Kontakt K8" offen und ihr Kontakt K8‴ geschlossen ist - also ihr Aktuator A9 von der lokalen Einspeisung 45 getrennt und ihr Aktuatoren A10 stromleitend mit der lokalen Einspeisungen 45 verbunden ist. Dabei kann entweder ihr Kontakt K7" geschlossen und ihr Kontakt K7‴ offen sein oder es kann ihr Kontakt K7" offen und ihr Kontakt K7‴ geschlossen sein. Das zugeordnete lokale Abschaltventil bilden dann wieder zwischen seinen Anschlüssen b und c einen Strömungspfad, so dass die zugeordneten Bremszylindern BZ ins Freie entlüftet werden.

Zum Überführen einer jeweiligen der Abschaltvorrichtungen 40₁-40₄ aus ihrer Einschaltstellung in ihre zweite Abschaltstellung oder aus ihrer ersten Abschaltstellung in ihre zweite Abschaltstellung ist eine jeweilige der Bedienhandlungen H₁-H₄ vorgesehen. Die Bedienhandlungen H₁-H₄ sind dabei mittels der Bedienelemente E₁-E₄ vorzunehmen.

Wirkt beispielsweise zumindest eines der Abschaltsteuersignale S1₂, S2₂, S3₂ auf die Abschaltvorrichtungen 40₂, so wird der Aktuator A7 bestromt und gibt das Steuersignal S7 zum Betätigen der Kontakte A7', A7", A7‴ aus. Dadurch werden die Kontakte K7' und K7" geöffnet und der Kontakt K7‴ wird geschlossen. Damit ist einerseits die Versorgungsleitung 40b unterbrochen. Andererseits ist die Bremssperreinheit 44 der Abschaltvorrichtung 40₂ aus ihrer Freigabestellung in eine erste Sperrstellung überführt.

Da nun die Versorgungsleitung 40b unterbrochen ist, können die nachfolgenden Abschaltvorrichtungen 40₃ und 40₄ nicht mehr in ihre erste Abschaltstellung überführt werden, selbst wenn eines der Abschaltsignale S1₃, S2₃, S3₃ bzw. S1₄, S2₄, S3₄ auf sie einwirkt, denn ihre Aktuatoren A7 können nicht mehr bestromt werden.

Würde jedoch zumindest eines der Abschaltsteuersignale S1₁, S2₁, S3₁ auf die Abschaltvorrichtungen 40₁ wirken, so würde der Aktuator A7 der Abschaltvorrichtungen 40₁ bestromt und dadurch ihre Kontakt K7' und K7" geöffnet und ihr Kontakt K7‴ geschlossen werden. Durch das Öffnen des Kontaktes K7' der Unterbrechungseinheit 42 der Abschaltvorrichtungen 40₁ würde nunmehr die Versorgungsleitung 40b im Bereich der Abschaltvorrichtungen 40₁ unterbrochen sein und der Aktuator A7 der Abschaltvorrichtungen 40₂ würde nicht mehr bestromt werden. Somit würde die Abschaltvorrichtung 40₂ aus ihrer ersten Abschaltstellung zurück in ihre Einschaltstellung überführt werden.

Wenn sich die Abschaltvorrichtung 40₂ in ihrer erste Abschaltstellung befindet und die beiden hier mit S4 und S5 bezeichneten beiden Einschaltsteuersignale gleichzeitig auf sie einwirken, dann wird der Aktuator A6 bestromt und gibt das Steuersignal S6 zum Betätigen des Kontaktes K6 aus. Der Kontakt K6 wird geöffnet, wodurch der Aktuator A7 nicht mehr bestromt wird. Auch dadurch kann also bewirkt werden, dass die Abschaltvorrichtung 40₂ aus ihrer ersten Abschaltstellung zurück in ihre Einschaltstellung überführt wird, bei welcher einerseits der Kontakt K7' geschlossen und der Kontakt K8' offen ist und bei welcher andererseits die Kontakte K7" und K8" geschlossen und die Kontakte K7‴ und K8‴ offen sind.

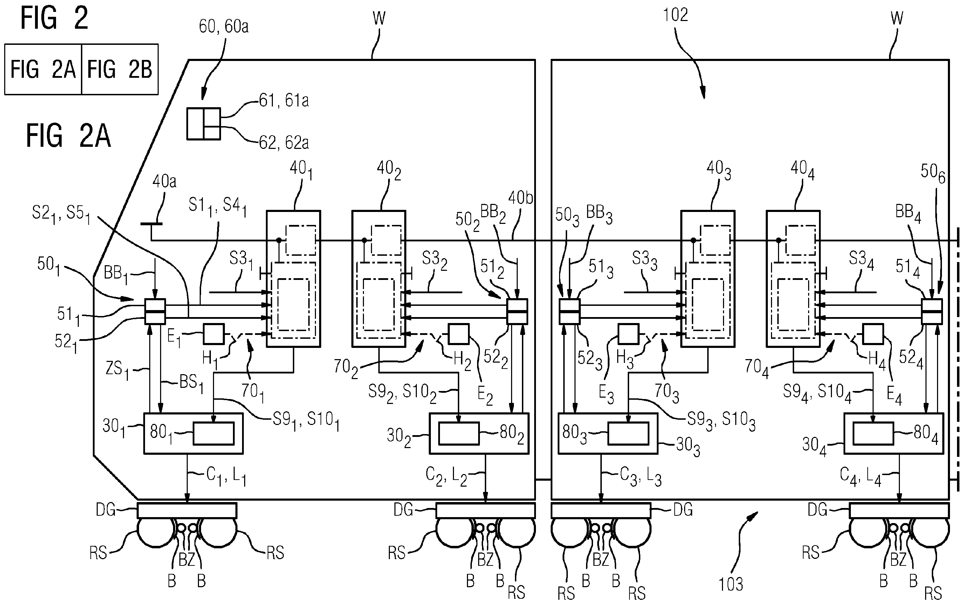

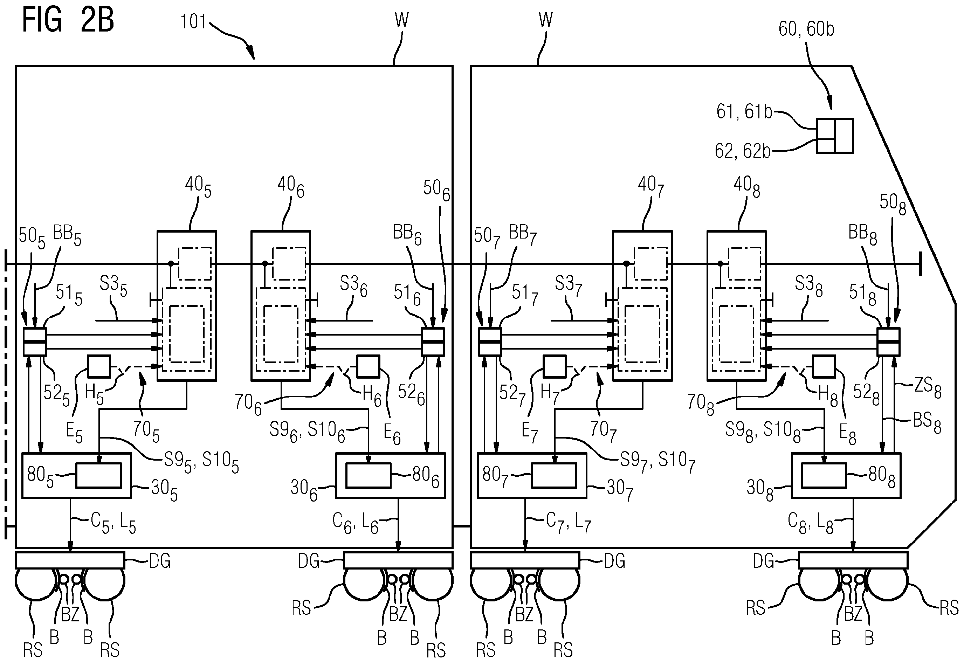

Die Figur 2 zeigt ein weiteres Schienenfahrzeug 101 mit einer Bremsanordnung 103 und einer erfindungsgemäßen Bremsabsperranordnung 102. Der einzige Unterschied zum Fahrzeug 1 besteht darin, dass nunmehr für jedes Drehgestell DG eine jeweilige lokale Bremsvorrichtung und eine jeweilige lokale Abschaltvorrichtung vorgesehen ist. Es sind also statt vier, nunmehr acht lokale Bremsvorrichtungen 30₁-30₈ und entsprechend statt vier, nunmehr acht Abschaltvorrichtungen 40₁-40₈ vorgesehen.

Die Erfindung lässt sich wie folgt zusammenfassen:
Es ist die elektrische Versorgungleitung 40b vorgesehen, welche sich von einem Ende im Fahrzeug zum anderen Ende im Fahrzeug erstreckt, wobei das Einspeisen von Energie nur von einem Ende der Versorgungleitung 40b aus erfolgt. Die Einspeisung 40a befindet sich also an dem einen Ende der Versorgungleitung 40b. Die Versorgungsleitung 40b speist mehrere lokale Abschalteinrichtungen 40₁-40₄; 40₁-40₈, die in einer Reihenschaltung in der Versorgungsleitung im Fahrzeug angeordnet sind.

Die an die Einspeisung 40a angeschlossene Versorgungsleitung 40b bildet somit eine fahrzeugweite (zugweite) Einrichtung, die mit mehreren lokalen Abschaltvorrichtungen 40₁-40₄; 40₁-40₈ verbunden ist, wobei sichergestellt werden kann, dass immer nur eine der lokalen Abschaltvorrichtungen 40₁-40₄; 40₁-40₈ aktiviert (ausgeschaltet) ist. Den Aktivierungsbefehl zur Abschaltung bildet beispielsweise das von der zentralen Bremsabsperrauslöseeinrichtung 62 ausgegebene jeweilige der Abschaltsteuersignale S3₁-S3₄; S3₁-S3₈.

Wenn nun bei Betätigung einer der lokalen Abschaltvorrichtungen 40₁-40₄; 40₁-40₈ in einem der Wagen W die entsprechende lokale Bremsvorrichtung deaktiviert wird, so wird gleichzeitig mit der Deaktivierung der lokalen Bremsvorrichtung die Versorgungsleitung 40b zu den nachfolgenden Wagen W unterbrochen. Somit ist sichergestellt, dass in den nachfolgenden Wagen W eine weitere Deaktivierung von lokalen Bremsvorrichtungen durch die jeweiligen Abschalteinrichtungen unmöglich wird.

Durch diese Lösung ist es nun möglich eine lokale Bremsvorrichtung durch Einsatz der erfindungsgemäßen, sicherheitstechnisch einfach ausgeführte Bremsabsperranordnung mittels eines Abschaltsteuersignals abzuschalten, ohne dass versehentlich bzw. durch fehlerhafte Ansteuerungen mehrere der Bremsvorrichtungen gleichzeitig deaktiviert werden können.

Automatisch kann eine Abschaltung auch durch eines der Abschaltsteuersignale S1₁-S1₄; S1₁-S1₈ der Bremssteuergeräte 51₁-51₄; 51₁-51₈ erfolgen. Die Bremssteuergeräte 51₁-51₄; 51₁-51₈ überwachen anhand der empfangenen Bremszustandssignale ZS₁-ZS₄; ZS₁-ZS₈ den Zustand der ihnen zugeordneten der lokalen Bremsvorrichtungen 30₁-30₄; 30₁-30₈ und geben das jeweilige der Abschaltsteuersignale S1₁-S1₄; S1₁-S1₈ bei einer Störung der jeweiligen der lokalen Bremsvorrichtungen 30₁-30₄; 30₁-30₈ aus.

In entsprechender Weise kann eine Abschaltung auch durch eines der Abschaltsteuersignale S2₁-S2₄; S2₁-S2₈ der Schnellbremssteuergeräte 52₁-52₄; 52₁-52₈ erfolgen. Die Schnellbremssteuergeräte 52₁-52₄; 52₁-52₈ überwachen anhand der empfangenen Bremszustandssignale ZS₁-ZS₄; ZS₁-ZS₈ ebenfalls den Zustand der ihnen zugeordneten der lokalen Bremsvorrichtungen 30₁-30₄; 30₁-30₈ und geben das jeweilige der Abschaltsteuersignale S2₁-S2₄; S2₁-S2₈ bei einer Störung der jeweiligen der lokalen Bremsvorrichtungen 30₁-30₄; 30₁-30₈ aus.

Parallel zu den Schaltern K1 bis K3 könnten weitere Schalter parallelgeschaltet sein, so dass weitere Ausführungsvarianten zur Abschaltung ermöglicht wären.

Eine solche weitere Ausführungsvariante könnte eine zentrale Fernabschaltung sein welche durch den Zugführer bedient wird. Beispielsweise durch Auswahl der gewünschten abzuschaltenden Bremsvorrichtung an einem hier nicht gezeigten Fahrerdisplay.

Eine andere solche Ausführungsvariante könnte eine lokale manuelle Abschaltung sein, welche insbesondere beim nächsten planmäßigen Halt des Fahrzeugs oder zu einem anderen geeigneten Zeitpunkt, durch das Zugpersonal betätigt wird. Beispielsweise durch Betätigen eines hier nicht gezeigten Bedienelementes des der gewünschten abzuschaltenden Bremsvorrichtung zugeordneten Abschaltvorrichtung.

In all diesen Varianten ist sichergestellt, dass zunächst nicht mehr als eine der lokalen Bremsvorrichtungen im Fahrzeug deaktiviert werden kann. Somit ist ein verbleibendes Bremsvermögen des Fahrzeuges immer gewährleistet und die Auswirkungen auf den Fahrbetrieb sind begrenzt.

Der Sicherheitsnachweis der Funktionalität der erfindungsgemäßen Bremsabsperranordnung kann auf vergleichsweise einfache Weise erfolgen.

Bei der erfindungsgemäßen Absperranordnung ist zusätzlich die im Folgenden noch einmal beschriebene Funktionalität realisiert.

Nachdem eine defekte lokale Bremsvorrichtung automatisch deaktiviert wurde, kann, insbesondere beim nächsten planmäßigen Halt des Fahrzeugs oder zu einem anderen geeigneten Zeitpunkt, durch das Zugpersonal zusätzlich das Bedienelement E₁, E₂, E₃ bzw. E₄ der zugeordneten lokale Abschaltvorrichtung betätigt werden, welche direkt auf den Kontakte K8" und K8‴ wirkt. Dadurch wird die Bremsvorrichtung der jeweiligen der Bremsvorrichtungen deaktiviert und es wird sichergestellt, dass die Versorgungsleitung 40b zu den nachfolgenden Wagen nicht unterbrochen werden kann. Somit ist es dann in der Folge möglich, dass eine weitere lokale Bremsvorrichtung nach den oben beschriebenen Mechanismen automatisch abgeschaltet werden kann. Dann ist also durch die erfindungsgemäße Bremsabsperranordnung sichergestellt, dass zusätzlich zu einer derartig manuell ausgelösten Abschaltung einer lokalen Bremsvorrichtung nur einmal eine automatische Abschaltung einer anderen der Bremsvorrichtungen erfolgen kann.

Mit der erfindungsgemäßen Bremsabsperranordnung beziehungsweise mit dem erfindungsgemäßen Verfahren zum Betrieb einer Bremsabsperranordnung erfolgt also in vorteilhafter Weise, insbesondere wenn Fehler erkannt werden, ein automatisches Abschalten derart, dass maximal eine Bremsvorrichtung zentral und dabei insbesondere automatisch abgeschaltet werden kann.

Ein derartiges automatische Abschalten verbessert die Verfügbarkeit der Fahrzeuge und reduziert die Anzahl sogenannter "Service Effecting Failure".

### Bezugszeichenliste

- 1; 101: Fahrzeug
- W: Wagen
- DG: Drehgestelle
- RS: Radsätze

- 2; 102: Bremssystem des Fahrzeugs

- 3; 103: Bremsanordnung
- 30₁-30₈: lokale Bremsvorrichtungen der Bremsanordnung
- C₁-C₈: Bremsdrücke
- L₁-L₈: Bremsdruckleitungen
- B: Scheiben- oder Klotzbremse
- BZ: Bremszylinder
- ZS₁-ZS₈: Bremszustandssignale der lokalen Bremsvorrichtungen 30₁-30₈
- 4; 104: Bremsabsperranordnung
- 40a: Zentrale Einspeisung (zentrale Energieversorgungseinrichtung)
- 40b: zentrale (fahrzeugweite) Versorgungsleitung

- 40₁-40₈: lokale Abschaltvorrichtungen
- 41: Versorgungsanschluss der jeweiligen lokalen Abschaltvorrichtung
- 42: Unterbrechungseinheit der jeweiligen lokalen Abschaltvorrichtung
- 43: Bremsabsperreinrichtung der jeweiligen lokalen Abschaltvorrichtung
- 44: Bremsabsperreinheit der jeweiligen lokalen Abschaltvorrichtung
- 45: lokale Einspeisung (lokale Energieversorgungseinrichtung) der jeweiligen lokalen Abschaltvorrichtung

- 60: zentralen Fahrzeugsteuereinrichtung
- 60a, 60b: zentrale Fahrzeugsteuereinheiten
- 61: zentrale Bremssteuereinrichtung
- 61a, 61b: zentrale Bremssteuereinheiten
- BB₁-BB₈: Bremsbefehle der zentralen Bremssteuereinrichtung 61

- 62: zentrale Bremsabsperrauslöseeinrichtung
- 62a und 62b: zentrale Einheiten zum Auslösen einer Absperrung (zentrale Absperrungen in Form von Fernabsperrungen)

- 50₁-50₈: lokale Bremssteuereinheiten
- 51₁-51₈: lokale Bremssteuergeräte (BSG)
- 52₁-52₈: lokale Schnellbremssteuergeräte (SBSG)
- BS₁-BS₈: Bremssteuersignale der lokalen Bremssteuereinheiten

- 70₁-70₈: lokale Einheiten zum Auslösen einer Absperrung (lokale Absperrungen in Form lokaler Bedieneinheiten)
- E₁-E₈: Bedienelemente der lokalen Einheiten zum Auslösen einer lokalen Absperrung
- H₁-H₈: mittels der Bedienelemente E₁-E₈ vorgenommene Bedienhandlungen zum Auslösen einer lokalen Absperrung

- 80₁-80₈: lokale Abschaltventile
- a, b, c: Anschlüsse der lokalen Abschaltventile

- K, K1-K5: als Schließer ausgebildete Kontakte der jeweiligen Bremsabsperreinrichtung 43
- K6: als Öffner ausgebildeter Kontakt der jeweiligen Bremsabsperreinrichtung 43
- K7': als Öffner ausgebildeter Kontakt der jeweiligen Unterbrechungseinheit 42
- K8': als Schließer ausgebildeter Kontakt der jeweiligen Unterbrechungseinheit 42
- K7", K8": als Öffner ausgebildete Kontakte der jeweiligen Bremsabsperreinheiten 44
- K7‴, K8‴: als Schließer ausgebildete Kontakte der jeweiligen Bremsabsperreinheiten 44
- A1-A6: Aktuaoren der jeweiligen lokalen Abschaltvorrichtung zum Betätigen der Kontakte K1-K6
- A7: Aktuator der jeweiligen lokalen Abschaltvorrichtung zum Betätigen der Kontakte K7', K7" und K7‴
- A8: Aktuator der jeweiligen lokalen Abschaltvorrichtung zum Betätigen der Kontakte K8', K8" und K8‴
- A9, A10: Aktuatoren der jeweiligen lokalen Abschaltvorrichtung zum Betätigen der Kontakte K9 und K10

- S1₁-S1₈: Abschaltsteuersignale der Bremssteuergeräte
- S2₁-S2₈: Abschaltsteuersignale der Schnellbremssteuergeräte
- S3₁-S3₈: Abschaltsteuersignale der Fernabschalteinrichtung
- S4₁-S4₈: Einschaltsteuersignale der Bremssteuergeräte
- S5₁-S5₈: Einschaltsteuersignale der Schnellbremssteuergeräte
- S6: Steuersignal des jeweiligen Aktuators A6 zum Betätigen des Kontaktes K6
- S7: Steuersignal des jeweiligen Aktuators A7 zum Betätigen der Kontakte K7', K7" und K7‴
- S8: Steuersignal des jeweiligen Aktuators A8 zum Betätigen der Kontakte K8', K8" und K8‴
- S9₁-S9₈: Steuersignale des jeweiligen Aktuators A9 der lokalen Abschaltvorrichtungen 40₁-40₈ zum Betätigen des zugeordneten Kontaktes K9 der lokalen Abschaltventile 80₁-80₄
- S10₁-S10₈: Steuersignale des jeweiligen Aktuators A10 der lokalen Abschaltvorrichtungen 40₁-40₈ zum Betätigen des zugeordneten Kontaktes K10 der lokalen Abschaltventile 80₁-80₄

- L1 bis L5: Elektrische Leitungen der jeweiligen lokalen Abschaltvorrichtung

- P1 und P2: Anschlusspunkte im Zuge der Leitung L1
- P3 und P4: Anschlusspunkte im Zuge der Leitung L3

## Patentansprüche

1. Bremsabsperranordnung (4; 104) mit mehreren aus einer Einschaltstellung in eine erste Abschaltstellung überführbaren Abschaltvorrichtungen (40₁-40₄; 40₁-40₈),
**dadurch gekennzeichnet, dass** die Bremsabsperranordnung (4; 104) geeignet ausgebildet ist, durch ein Überführen einer (40₂) der Abschaltvorrichtungen (40₁-40₄; 40₁-40₈)in ihre erste Abschaltstellung für zumindest einen Teil (40₃-40₄; 40₃-40₈) der übrigen Abschaltvorrichtungen (40₁, 40₃-40₄; 40₁, 40₃-40₈) das Überführen in ihre erste Abschaltstellung zu verhindern und, falls sich von dem zumindest einen Teil (40₃-40₄; 40₃-40₈) der übrigen Abschaltvorrichtungen (40₁, 40₃-40₄; 40₁, 40₃-40₈) schon eine andere Abschaltvorrichtung (40₃) in ihrer ersten Abschaltstellung befindet, ein Überführen der anderen Abschaltvorrichtung (40₃) in ihre Einschaltstellung zu bewirken.

2. Bremsabsperranordnung (4; 104) nach Anspruch 1,
**dadurch gekennzeichnet, dass** die Bremsabsperranordnung (4; 104) geeignet ausgebildet ist, durch ein Überführen der einen Abschaltvorrichtung (40₂) aus ihrer ersten Abschaltstellung in eine zweite Abschaltstellung zu bewirken, dass von den übrigen Abschaltvorrichtungen (40₁, 40₃-40₄; 40₁, 40₃-40₈) eine in ihre erste Abschaltstellung überführbar ist.

3. Bremsabsperranordnung (4; 104) nach einem der Ansprüche 1 oder 2,
**dadurch gekennzeichnet, dass** die Bremsabsperranordnung (4; 104) eine durch eine Energieversorgungseinrichtung (40a) gespeiste Versorgungsleitung (40b) aufweist, an welche die Abschaltvorrichtungen (40₁-40₄; 40₁-40₈) über jeweils einen Versorgungsanschluss (41) in Reihe angeschlossen sind,
wobei jede der Abschaltvorrichtungen (40₁-40₄; 40₁-40₈) jeweils eine im Zuge der Versorgungsleitung (40b) ihrem Versorgungsanschluss (41) nachgeordnete Unterbrechungseinheit (42) mit einem Kontakt (K7') zum Unterbrechen der Versorgungsleitung (40b) aufweist.

4. Bremsabsperranordnung (4; 104) nach Anspruch 3,
**dadurch gekennzeichnet, dass** jede der Abschaltvorrichtungen (40₁-40₄; 40₁-40₈) jeweils eine Bremsabsperreinheit (44) aufweist und derart ausgebildet ist, dass ihr Überführen in ihre erste Abschaltstellung durch zumindest ein ihr zugeordnetes Abschaltsteuersignal (S1₁, S2₁, S3₁ - S1₄, S2₄, S3₄; S1₁, S2₄, S3₁ - S1₈, S2₈, S3₈) erfolgt, bei Einwirkung dessen einerseits ihr Kontakt (K7₁') geöffnet und damit die Versorgungsleitung (40b) unterbrochen wird und andererseits ihre Bremsabsperreinheit (44) aus einer Freigabestellung in eine erste Sperrstellung überführt wird.

5. Bremsabsperranordnung (4; 104) nach Anspruch 4,
**dadurch gekennzeichnet, dass** jede der Abschaltvorrichtungen (40₁-40₄; 40₁-40₈) jeweils derart ausgebildet ist, dass bei Einwirkung von zumindest zwei ihr zugeordneten Einschaltsteuersignalen (S4₁, S5₁ - S4₄, S5₄; S4₁, S5₁ - S4₈, S5₈) einerseits ihr Kontakt (K7') geschlossen und damit die Versorgungsleitung (40b) geschlossen wird und andererseits ihre Bremsabsperreinheit (44) aus ihrer ersten Sperrstellung zurück in ihre Freigabestellung überführt wird.

6. Bremsabsperranordnung (4; 104) nach einem der Ansprüche 3 bis 5,
**dadurch gekennzeichnet, dass** jede der Abschaltvorrichtungen (40₁-40₄; 40₁-40₈) jeweils derart ausgebildet ist, dass bei Einwirkung eines ihr zugeordneten Abschaltbediensignals oder bei Einwirkung einer Bedienhandlung (H₁-H₄; H₁-H₈) einerseits ein zusätzlicher Kontaktes (K8'), welcher parallel zu ihrem einen Kontakt (K7') geschaltet ist, geschlossen und damit die Versorgungsleitung (40b) geschlossen wird und andererseits ihre Bremsabsperreinheit (44) in eine zweite Sperrstellung überführt wird.

7. Bremssystem (2; 102) für ein Fahrzeug,
**gekennzeichnet, durch**
zumindest eine Bremsabsperranordnung (4; 104) nach einem der Ansprüche 1 bis 6.

8. Bremssystem (2; 102) nach Anspruch 7,
**dadurch gekennzeichnet, dass**
das Bremssystem (2; 102) mehreren Bremsvorrichtungen (30₁-30₄; 30₁-30₈) aufweist,
wobei jeder der Abschaltvorrichtungen (40₁-40₄; 40₁-40₈) jeweils eine der Bremsvorrichtungen (30₁-30₄; 30₁-30₈) zugeordnet ist und
wobei jede der Abschaltvorrichtungen (40₁-40₄; 40₁-40₈) geeignet ausgebildet ist, in ihrer ersten Abschaltstellung die Bremsfunktion der ihr zugeordneten Bremsvorrichtungen zu unterbinden und in ihrer ersten Einschaltstellung die Bremsfunktion der ihr zugeordneten Bremsvorrichtung freizugeben.

9. Bremssystem (2; 102) nach Anspruch 8,
**gekennzeichnet, durch**
zwei oder mehr Bremsabsperranordnungen nach einem der Ansprüche 1 bis 6,
wobei jede der Bremsabsperranordnungen jeweils auf einen Teil der Bremsvorrichtungen des Fahrzeugs wirkt.

10. Fahrzeug (1; 101), insbesondere spurgeführtes Fahrzeug,
**gekennzeichnet, durch**
ein Bremssystem (2; 102) nach einem der Ansprüche 7 bis 9.

11. Verfahren zum Betrieb einer Bremsabsperranordnung (4; 104), welche mehrere aus einer Einschaltstellung in eine erste Abschaltstellung überführbare Abschaltvorrichtungen (40₁-40₄; 40₁-40₈) aufweist,
**dadurch gekennzeichnet, dass**
durch ein Überführen einer (40₂) der Abschaltvorrichtungen (40₁-40₄; 40₁-40₈) in ihre erste Abschaltstellung für zumindest einen Teil (40₃-40₄; 40₃-40₈) der übrigen Abschaltvorrichtungen (40₁, 40₃-40₄; 40₁, 40₃-40₈) das Überführen in ihre erste Abschaltstellung verhindern wird und, falls sich von dem zumindest einen Teil (40₃-40₄; 40₃-40₈) der übrigen Abschaltvorrichtungen (40₁, 40₃-40₄; 40₁, 40₃-40₈) schon eine andere Abschaltvorrichtung (40₃) in ihrer ersten Abschaltstellung befindet, ein Überführen der anderen Abschaltvorrichtung (40₃) in ihre Einschaltstellung bewirkt wird.

12. Verfahren nach Anspruch 11,
**dadurch gekennzeichnet, dass**
durch ein Überführen der einen Abschaltvorrichtung (40₂) aus ihrer ersten Abschaltstellung in eine zweite Abschaltstellung bewirkt wird, dass von den übrigen Abschaltvorrichtungen (40₁, 40₃-40₄; 40₁, 40₃-40₈) eine in ihre erste Abschaltstellung überführbar ist.

13. Verfahren nach einem der Ansprüche 11 oder 12,
**dadurch gekennzeichnet, dass** eine Versorgungsleitung (40b), an welche die Abschaltvorrichtungen (40₁-40₁; 40₁-40₈) über jeweils einen Versorgungsanschluss (41) in Reihe angeschlossen sind, durch eine Energieversorgungseinrichtung (40a) gespeist wird,
wobei jede der Abschaltvorrichtungen (40₁-40₄; 40₁-40₈) jeweils mit einer im Zuge der Versorgungsleitung (40b) ihrem Versorgungsanschluss (41) nachgeordneten Unterbrechungseinheit (42) mit einem Kontakt (K7') zum Unterbrechen der Versorgungsleitung (40b) bereitgestellt wird.

14. Verfahren nach Anspruch 13,
**dadurch gekennzeichnet, dass** das Überführen einer jeweiligen der Abschaltvorrichtungen (40₁-40₄; 40₁-40₈) in ihre erste Abschaltstellung jeweils durch zumindest ein ihr zugeordnetes Abschaltsteuersignal (S1₁, S2₁, S3₁ - S1₄, S2₄, S3₄; S1₁, S2₁, S3₁ - S1₈, S2₈, S3₈) erfolgt, bei Einwirkung dessen einerseits ihr Kontakt (K7₁') geöffnet und damit die Versorgungsleitung (40b) unterbrochen wird und andererseits ihre Bremsabsperreinheit (44) aus einer Freigabestellung in eine erste Sperrstellung überführt wird.

15. Verfahren nach Anspruch 14,
**dadurch gekennzeichnet, dass** bei einer jeweiligen der Abschaltvorrichtungen (40₁-40₄; 40₁-40₈) bei Einwirkung von zumindest zwei ihr zugeordneten Einschaltsteuersignalen (S4₁, S5₁ - S4₄, S5₄; S4₁, S5₁ - S4₈, S5₈) einerseits ihr Kontakt (K7') geschlossen und damit die Versorgungsleitung (40b) geschlossen wird und andererseits ihre Bremsabsperreinheit (44) aus ihrer ersten Sperrstellung zurück in ihre Freigabestellung überführt wird.

16. Verfahren nach einem der Ansprüche 13 bis 15,
**dadurch gekennzeichnet, dass** bei einer jeweiligen der Abschaltvorrichtungen (40₁-40₄; 40₁-40₈) bei Einwirkung eines ihr zugeordneten Abschaltbediensignals oder bei Einwirkung einer Bedienhandlung (H₁-H₄; H₁-H₈) einerseits ein zusätzlicher Kontakt (K8'), welcher parallel zu ihrem ersten Kontakt (K7') geschaltet ist, geschlossen und damit die Versorgungsleitung (40b) geschlossen wird und andererseits ihre Bremsabsperreinheit (44) in eine zweite Sperrstellung überführt wird.

## Claims

1. Brake shut-off arrangement (4; 104) with a plurality of shut-off apparatuses (40₁-40₄; 40₁-40₈) that can be transferred from a switched-on setting into a first switched-off setting, **characterised in that**
the brake shut-off arrangement (4; 104) is suitably embodied, by transferring one (40₂) of the shut-off apparatuses (40₁-40₄; 40₁-40₈) into its first switched-off setting, to prevent at least one portion (40₃-40₄; 40₃-40₈) of the remaining shut-off apparatuses (40₁, 40₃-40₄; 40₂, 40₃-40₈) from transferring into their first switched-off setting and if, of the at least one portion (40₃-40₄; 40₃-40₈) of the remaining shut-off apparatuses (40₁, 40₃-40₄; 40₂, 40₃-40₈), another shut-off apparatus (40₃) is already in its first switched-off setting, to cause the other shut-off apparatus (40₃) to transfer into its switched-on setting.

2. Brake shut-off arrangement (4; 104) according to claim 1, **characterised in that**
the brake shut-off arrangement (4; 104) is suitably embodied, by transferring the one shut-off apparatus (40₂) from its first switched-off setting into a second switched-off setting, to cause one of the remaining shut-off apparatuses (40₁, 40₃-40₄; 40₂, 40₃-40₈) to be able to be transferred into its first switched-off setting.

3. Brake shut-off arrangement (4; 104) according to one of claims 1 or 2,
**characterised in that**
the brake shut-off arrangement (4; 104) has a supply line (40b), which is fed by an energy supply facility (40a) and to which the shut-off apparatuses (40₁-40₄; 40₁-40₈) are connected in series via a supply connection (41) in each case,
wherein each of the shut-off apparatuses (40₁-40₄; 40₁-40₈) in each case has an interrupt unit (42) arranged downstream of its supply connection (41) as part of the supply line (40b) with a contact (K7') for interrupting the supply line (40b).

4. Brake shut-off arrangement (4; 104) according to claim 3,
**characterised in that**
each of the shut-off apparatuses (40₁-40₄; 40₁-40₈) in each case has a brake shut-off unit (44) and is embodied in such a manner that its transfer into its first switched-off setting takes place by way of at least one switch-off control signal (S1₁, S2₁, S3₁ - S1₄, S2₄, S3₄; S1₁, S2₁, S3₁ - S1₈, S2₈, S3₈) assigned to it, on the effect of which on the one hand its contact (K7₁') is opened, thus interrupting the supply line (40b), and on the other hand its brake shut-off unit (44) is transferred from a release setting into a first block setting.

5. Brake shut-off arrangement (4; 104) according to claim 4,
**characterised in that**
each of the shut-off apparatuses (40₁-40₄; 40₁-40₈) in each case is embodied in such a manner that, on the effect of at least two switch-on control signals (S4₁, S5₁ - S4₄, S5₄; S4₁, S5₁ - S4₈, S5₈) assigned to it, on the one hand its contact (K7') is closed, thus closing the supply line (40b), and on the other hand its brake shut-off unit (44) is transferred from its first block setting back into its release setting.

6. Brake shut-off arrangement (4; 104) according to one of claims 3 to 5,
**characterised in that**
each of the shut-off apparatuses (40₁-40₄; 40₁-40₈) in each case is embodied in such a manner that, on the effect of a switch-off operator signal or on the effect of an operator action (H₁-H₄; H₈-H₈), on the one hand an additional contact (K8') is closed, which is connected in parallel with its one contact (K7'), thus closing the supply line (40b), and on the other hand its brake shut-off unit (44) is transferred into a second block setting.

7. Brake system (2; 102) for a vehicle,
**characterised by**
at least one brake shut-off arrangement (4; 104) according to one of claims 1 to 6.

8. Brake system (2; 102) according to claim 7,
**characterised in that**
the brake system (2; 102) has a plurality of brake apparatuses (30₁-30₄; 30₁-30₈),
wherein each of the shut-off apparatuses (40₁-40₄; 40₁-40₈) in each case is assigned one of the brake apparatuses (30₁-30₄; 30₁-30₈) and
wherein each of the shut-off apparatuses (40₁-40₄; 40₁-40₈) is suitably embodied, in its first switched-off setting, to suppress the brake function of the brake apparatuses assigned to it and, in its first switched-on setting, to release the brake function of the brake apparatus assigned to it.

9. Brake system (2; 102) according to claim 8,
**characterised by**
two or more brake shut-off arrangements according to one of claims 1 to 6,
wherein each of the brake shut-off arrangements in each case acts on a portion of the brake apparatuses.

10. Vehicle (1; 101), in particular rail-guided vehicle, **characterised by**
a brake system (2; 102) according to one of claims 7 to 9.

11. Method for operating a brake shut-off arrangement (4; 104), which has a plurality of shut-off apparatuses (40₁-40₄; 40₁-40₈) that can be transferred from a switched-on setting into a switched-off setting,
**characterised in that**
by transferring one (40₂) of the shut-off apparatuses (40₁-40₄; 40₁-40₈) into its first switched-off setting, at least one portion (40₃-40₄; 40₃-40₈) of the remaining shut-off apparatuses (40₁, 40₃-40₄; 40₂, 40₃-40₈) are prevented from transferring into their first switched-off setting and if, of the at least one portion (40₃-40₄; 40₃-40₈) of the remaining shut-off apparatuses (40₁, 40₃-40₄; 40₂, 40₃-40₈), another shut-off apparatus (40₃) is already in its first switched-off setting, the other shut-off apparatus (40₃) is made to transfer into its switched-on setting.

12. Method according to claim 11,
**characterised in that**
by transferring the one shut-off apparatus (40₂) from its first switched-off setting into a second switched-off setting, one of the remaining shut-off apparatuses (40₁, 40₃-40₄; 40₂, 40₃-40₈) is able to be transferred into its first switched-off setting.

13. Method according to one of claims 11 or 12,
**characterised in that**
a supply line (40b), to which the shut-off apparatuses (40₁-40₄; 40₁-40₈) are connected in series via a supply connection (41) in each case, is fed by an energy supply facility (40a), wherein each of the shut-off apparatuses (40₁-40₄; 40₁-40₈) in each case is provided with an interrupt unit (42) arranged downstream of its supply connection (41) as part of the supply line (40b) with a contact (K7') for interrupting the supply line (40b).

14. Method according to claim 13,
**characterised in that**
the transfer of a respective one of the shut-off apparatuses (40₁-40₄; 40₁-40₈) into its first switched-off setting in each case takes place by way of at least one switch-off control signal (S1₁, S2₁, S3₁ - S1₄, S2₄, S3₄; S1₁, S2₁, S3₁ - S1₈, S2₈, S3₈) assigned to it, on the effect of which on the one hand its contact (K7₁') is opened, thus interrupting the supply line (40b), and on the other hand its brake shut-off unit (44) is transferred from a release setting into a first block setting.

15. Method according to claim 14,
**characterised in that**
for a respective one of the shut-off apparatuses (40₁-40₄; 40₁-40₈), on the effect of at least two switch-on control signals (S4₁, S5₁ - S4₄, S5₄; S4₁, S5₁ - S4₈, S5₈) assigned to it, on the one hand its contact (K7') is closed, thus closing the supply line (40b), and on the other hand its brake shut-off unit (44) is transferred from its first block setting back into its release setting.

16. Method according to one of claims 13 to 15,
**characterised in that**
for a respective one of the shut-off apparatuses (40₁-40₄; 40₁-40₈), on the effect of a switch-off operator signal assigned to it or on effect of an operator action (H₁-H₄; H₁-H₈), on the one hand an additional contact (K8'), which is connected in parallel with its first contact (K7'), thus closing the supply line (40b), and on the other hand its brake shut-off unit (44) is transferred into a second block setting.

## Revendications

1. Montage (4 ; 104) de serrage de frein comprenant plusieurs dispositifs (40₁-40₄ ; 40₁-40₈) de mise hors circuit pouvant passer d'une position en circuit à une première position de mise hors circuit,
**caractérisé en ce que**
le montage (4 ; 104) de serrage de frein est constitué de manière propre, par un passage de l'un (40₂) des dispositifs (40₁-40₄ ; 40₁-40₈) de mise hors circuit dans sa première position de mise hors circuit, à empêcher, pour au moins une partie (40₃-40₄ ; 40₃-40₈) des autres dispositifs (40₁, 40₃-40₄ ; 40₂, 40₃-40₈) de mise hors circuit, le passage dans leur première position de mise hors circuit et, si de la au moins une partie (40₃-40₄ ; 40₃-40₈) des autres dispositifs (40₁, 40₃-40₄ ; 40₂, 40₃-40₈) de mise hors circuit un autre dispositif (40₃) de mise hors circuit se trouve déjà dans sa première position de mise hors circuit, à provoquer un passage de l'autre dispositif (40₃) de mise hors circuit dans sa position de mise en circuit.

2. Montage (4 ; 104) de serrage de frein suivant la revendication 1,
**caractérisé en ce que**
le montage (4 ; 104) de serrage de frein est constitué de manière propre, par un passage du un dispositif (40₂) de mise hors circuit de sa première position de mise hors circuit à une deuxième position de mise hors circuit, à provoquer que, des autres dispositifs (40₁, 40₃-40₄ ; 40₂, 40₃-40₈) de mise hors circuit, l'un puisse passer dans sa première position de mise hors circuit.

3. Montage (4 ; 104) de serrage de frein suivant l'une des revendications 1 ou 2,
**caractérisé en ce que**
le montage (4 ; 104) de serrage de frein a une ligne (40b) d'alimentation, qui est alimentée par un dispositif (40a) d'alimentation en électricité et sur laquelle les dispositifs (40₁-40₄ ; 40₁-40₈) de mise hors circuit sont montés en série par respectivement une borne (41) d'alimentation,
dans lequel chacun des dispositifs (40₁-40₄ ; 40₁-40₈) de mise hors circuit a respectivement une unité (42) d'interruption, qui est montée en aval de sa borne (41) d'alimentation dans le cours de la ligne (40b) d'alimentation et qui a un contact (K7') d'interruption de la ligne (40b) d'alimentation.

4. Montage (4 ; 104) de serrage de frein suivant la revendication 3,
**caractérisé en ce que**
chacun des dispositifs (40₁-40₄ ; 40₁-40₈) de mise hors circuit a respectivement une unité (44) de serrage de frein et est constitué de manière à ce que son passage dans sa première position de mise hors circuit s'effectue par au moins un signal (S1₁, S2₁, S3₁-S1₄, S2₄, S3₄ ; S1₁, S2₁, S3₁-S1₈, S2₈, S3₈) de commande de mise hors circuit, qui lui est associé, par l'effet duquel d'une part son contact (K7₁') est ouvert et ainsi la ligne (40b) d'alimentation est interrompue et d'autre part son unité (44) de serrage de frein passe d'une position de relâchement à une première position de serrage.

5. Montage (4 ; 104) de serrage de frein suivant la revendication 4,
**caractérisé en ce que**
chacun des dispositifs (40₁-40₄ ; 40₁-40₈) de mise hors circuit est constitué respectivement de manière à ce que, sous l'effet d'au moins deux signaux (S4₁, S5₁-S4₄, S5₄ ; S4₁, S5₁-S4₈, S5₈) de commande de mise en circuit, qui lui sont associés d'une part son contact (K7') soit fermé, et ainsi la ligne (40b) d'alimentation soit fermée et d'autre part que son unité (44) de serrage de frein revienne de sa première position de serrage à sa position de relâchement.

6. Montage (4 ; 104) de serrage de frein suivant l'une des revendications 3 à 5,
**caractérisé en ce que**
chacun des dispositifs (40₁-40₄ ; 40₁-40₈) de mise hors circuit est constitué respectivement de manière à ce que, sous l'action d'un signal de commande de mise hors circuit, qui lui associé, ou sous l'action d'une manipulation (H₁-H₄ ; H₁-H₈) de service, d'une part un contact (K8') supplémentaire, qui est monté en parallèle avec son contact (K7'), se ferme et qu'ainsi la ligne (40b) d'alimentation se ferme et d'autre part que son unité (44) de serrage de frein passe dans une deuxième position de serrage.

7. Système (2 ; 102) de frein d'un véhicule,
**caractérisé par**
au moins un montage (4 ; 104) de serrage de frein suivant l'une des revendications 1 à 6.

8. Système (2 ; 102) de frein suivant la revendication 7,
**caractérisé en ce que**
le système (2 ; 102) a plusieurs dispositifs (30₁-30₄ ; 30₁-30₈) de frein,
dans lequel à chacun des dispositifs (40₁-40₄ ; 40₁-40₈) de mise hors circuit est associé respectivement l'un des dispositifs (30₁-30₄ ; 30₁-30₈) de frein et
dans lequel chacun des dispositifs (40₁-40₄ ; 40₁-40₈) de mise hors circuit est constitué de manière propre à supprimer, dans sa première position de mise hors circuit, la fonction de freinage des dispositifs de frein, qui lui sont associés et, dans sa première position de mise en circuit, à valider la fonction de freinage du dispositif de frein, qui lui est associé.

9. Système (2 ; 102) de frein suivant la revendication 8,
**caractérisé par**
deux ou plusieurs montages de serrage de frein suivant l'une des revendications 1 à 6,
dans lequel chacun des montages de serrage de frein agit respectivement sur une partie des dispositifs de frein du véhicule.

10. Véhicule (1 ; 101), notamment véhicule guidé,
**caractérisé par**
un système (2 ; 102) de frein suivant l'une des revendications 7 à 9.

11. Procédé pour faire fonctionner un montage (4 ; 104) de serrage de frein, qui a plusieurs dispositifs (40₁-40₄ ; 40₁-40₈) de mise hors circuit pouvant passer d'une position de mise en circuit à une première position de mise hors circuit,
**caractérisé en ce que**,
par un passage de l'un (40₂) des dispositifs (40₁-40₄ ; 40₁-40₈) de mise hors circuit dans sa première position de mise hors circuit, on empêche, pour au moins une partie (40₃-40₄ ; 40₃-40₈) des autres dispositifs (40₁, 40₃-40₄ ; 40₁, 40₃-40₈) de mise hors circuit, le passage dans leur première position de mise hors circuit et, si de la au moins une partie (40₃-40₄ ; 40₃-40₈) des autres dispositifs (40₁, 40₃-40₄ ; 40₁, 40₃-40₈) de mise hors circuit, un autre dispositif (40₃) de mise hors circuit se trouve déjà dans sa première position de mise hors circuit, on provoque un passage de l'autre dispositif (40₃) de mise hors circuit dans sa position de mise en circuit.

12. Procédé suivant la revendication 11,
**caractérisé en ce que**,
par un passage du un dispositif (40₂) de mise hors circuit de sa première position de mise hors circuit, dans une deuxième position de mise hors circuit, on provoque que des autres dispositifs (40₁, 40₃-40₄ ; 40₂, 40₃-40₈) de mise hors circuit, l'un peut passer dans sa première position de mise hors circuit.

13. Procédé suivant l'une des revendications 11 ou 12,
**caractérisé en ce que**
on alimente, par un dispositif (40a) d'alimentation en électricité, une ligne (40b) d'alimentation, sur laquelle les dispositifs (40₁-40₄ ; 40₁-40₈) de mise hors circuit sont montés en série par respectivement une borne (41) d'alimentation,
dans lequel on pourvoit chacun des dispositifs (40₁-40₄ ; 40₁-40₈) de mise hors circuit respectivement d'une unité (42) d'interruption montée en aval, dans le cours de la ligne (40b) d'alimentation, de sa borne (41) d'alimentation et ayant un contact (K7') d'interruption de la ligne (40b) d'alimentation.

14. Procédé suivant la revendication 13,
**caractérisé en ce que**
le passage de l'un respectif des dispositifs (40₁-40₄ ; 40₁-40₈) de mise hors circuit dans sa première position de mise hors circuit s'effectue respectivement par un au moins un signal (S1₁, S2₁, S3₁-S1₄, S2₄, S3₄ ; S1₁, S2₁, S3₁-S1₈, S2₈, S3₈) de commande de mise hors circuit, qui lui est associé, sous l'effet duquel d'une part son contact (K7₁') s'ouvre et ainsi la ligne (40b) d'alimentation est interrompue et d'autre part son unité (44) de serrage de frein passe d'une position de relâchement à une première position de serrage.

15. Procédé suivant la revendication 14,
**caractérisé en ce que**,
pour l'un respectif des dispositifs (40₁-40₄ ; 40₁-40₈) de mise hors circuit, par l'effet d'au moins deux signaux ( S4₁, S5₁-S4₄, S5₄ ; S4₁, S5₁-S4₈, S5₈) de commande de mise en circuit, qui lui sont associés, d'une part on ferme son contact (K7') et ainsi on ferme la ligne (40b) d'alimentation et d'autre part, on fait revenir son unité (44) de serrage de frein de sa première position de serrage à sa position de relâchement.

16. Procédé suivant l'une des revendications 13 à 15,
**caractérisé en ce que**,
pour l'un respectif des dispositifs (40₁-40₄ ; 40₁-40₈) de mise hors circuit, par l'effet d'un signal de service de mise hors circuit, qui lui est associé, sous l'effet d'une manipulation (H₁-H₄ ; H₁-H₈) de service d'une part on ferme un contact (K8') supplémentaire, qui est monté en parallèle à son premier contact (K7') et on ferme ainsi la ligne (40b) d'alimentation et d'autre part on fait passer son unité (44) de serrage de frein dans une deuxième position de serrage.
